# EUROPÄISCHE PATENTSCHRIFT

(11) **EP 2 786 046 B1**
(45) Veröffentlichungstag und Bekanntmachung des Hinweises auf die Patenterteilung: **15.07.2015**
(21) Anmeldenummer: 12769869.4
(22) Anmeldetag: 07.09.2012
(51) Int. Cl.: F16H 55/18

(54) **ZAHNRAD FÜR EINE SPIELFREIE STIRNRADSTUFE**
GEAR FOR A SPUR GEAR STAGE WITHOUT PLAY
PIGNON POUR UN ÉTAGE DE PIGNONS DROITS SANS JEU

(30) Priorität: 02.12.2011 AT 500012011
(43) Veröffentlichungstag der Anmeldung: 08.10.2014
(73) Patentinhaber: Miba Sinter Austria GmbH, 4663 Laakirchen (AT)
(72) Erfinder: DICKINGER, Karl, A-4655 Vorchdorf (AT); KOKOSKA, Anton, 2705 Zazriva (SK); MÜLLER, Alexander, A-4813 Altmünster (AT)
(74) Vertreter: Patentanwaltskanzlei Hübscher
(86) Internationale Anmeldenummer: PCT/AT2012/050134
(87) Internationale Veröffentlichungsnummer: WO 2013/078489

(56) Entgegenhaltungen:
- DE-A1-102009 015 947
- US-B1- 7 752 937

## Beschreibung

### Technisches Gebiet

Die Erfindung bezieht sich auf ein Zahnrad für eine spielfreie Stirnradstufe mit einer Nabe und einem Zahnkranz, der entlang einer achsnormalen Teilungsebene in zwei Teilkränze geteilt ist, nämlich in einen nabenfesten Kranzteil und in einen diesem gegenüber koaxial drehbar gelagerten Kranzring, der die Nabe abschnittsweise in Umfangsrichtung umschließende Federn bildet, die mit ihren Wurzeln einstückig mit dem Kranzring verbunden sind und sich mit ihren freien, gegen die Nabe vorstehenden Enden an Anschlägen der Nabe abstützen

### Stand der Technik

Um eine spielfreie Stirnradstufe zur Übertragung wechselnder Drehmomente zu erhalten, ist der Einsatz von Zahnrädern mit einem entlang einer achsnormalen Teilungsebene geteilten Zahnkranz bekannt, wobei die beiden Teilkränze, nämlich ein nabenfester Kranzteil und ein gegenüber diesem Kranzteil koaxial drehbarer Kranzring, gegeneinander federnd verspannt werden, sodass sich beim Eingriff eines solchen geteilten Zahnkranzes in ein Gegenrad die beiden Teilkränze federnd an die einander gegenüberliegenden Zahnflanken des Gegenrades spielfrei anlegen. Um die gegenseitige federnde Verspannung der beiden Kranzteile zu erreichen, kann eine die Nabe des Zahnrades umschließende Ringfeder eingesetzt werden (EP 1 728 010 B1), die sich mit ihren Enden an je einem Anschlag des nabenfesten Kranzteiles und des Kranzringes unter einer entsprechenden Vorspannung abstützt. Die Ringfeder stellt allerdings einen gesonderten Konstruktionsteil dar.

Um den mit einer solchen gesonderten Ringfeder verbundenen Aufwand zu vermeiden, wurde bereits vorgeschlagen (WO 2008/142131 A2), die Ringfeder auf mehrere sich jeweils über einen Umfangsabschnitt erstreckende Federn aufzuteilen und diese Federn einstückig mit dem Kranzring auszubilden, sodass die freien Enden der Federn des innerhalb einer einspringenden Ringschulter des nabenfesten Kranzteils drehbar gelagerten Kranzrings lediglich an einem Anschlag des nabenfesten Kranzteils-abgestützt werden müssen. Es hat sich allerdings herausgestellt, dass die auftretenden Belastungen der als einseitig eingespannte Biegefedern wirksamen Federn zu einer örtlichen Überlastung der Federn führen können, insbesondere bei einer vergleichsweise geringen Wanddicke des für den Kranzring eingesetzten Ringscheibenkörpers.

Die DE 10 2009 015 947 A1 offenbart ein Zahnrad nach dem Oberbegriff des Anspruchs 1.

### Darstellung der Erfindung

Der Erfindung liegt somit die Aufgabe zugrunde, ein Zahnrad der eingangs geschilderten Art so auszugestalten, dass die Gefahr einer örtlichen Überlastung der Federn weitgehend ausgeschlossen werden kann.

Ausgehend von einem Zahnrad für eine spielfreie Stirnradstufe löst die Erfindung die gestellte Aufgabe dadurch, dass der drehbar auf der Nabe gelagerte Kranzring wenigstens drei bezüglich der Zahnkranzachse drehsymmetrisch angeordneten Federn bildet und dass die ebenfalls drehsymmetrisch angeordneten Anschläge der Nabe in Umfangsrichtung gegen die Wurzeln der zugehörigen Federn radial nach außen ansteigende Anlaufflächen für die freien Enden der Federn aufweisen.

Durch das Vorsehen einer entsprechend geneigten Anlauffläche für das freie Ende der mit dem Kranzring einstückig ausgebildeten Federn wird für die Verlagerung der Federn beim Eingriff eines Gegenrades in den Zahnkranz des Zahnrades ein zusätzlicher Freiheitsgrad gewonnen, sodass ein eine örtliche Überlastung der Federn unterbindender Lastausgleich stattfinden kann. Dazu kommt, dass sich mit einer Verlagerung der Federenden entlang ihrer Anlaufflächen der Federweg vergrößert, was die Möglichkeit eröffnet, weichere Federn einzusetzen und damit einer örtlichen Überlastung der Federn entgegenzuwirken. Außerdem bewirken die durch die geneigten Anlaufflächen bedingte Radialkomponenten der Federkräfte eine Zentrierung des Kranzringes gegenüber dem nabenfesten Kranzteil des Zahnkranzes.

Obwohl die konstruktive Ausführung der Anschläge mit den Anlaufflächen für die freien Enden der Federn unterschiedlich ausfallen kann, ergeben sich besonders einfache Konstruktionsverhältnisse, wenn über den Außenumfang der Nabe verteilte Axialnuten vorgesehen sind, die die Anschläge für die freien Enden der Federn bilden. Dies bedeutet, dass zumindest eine der Nutwände gegenüber einer Durchmesserebene zur Ausbildung der Anlauffläche in Umfangsrichtung geneigt verlaufen muss. Die Anordnung von Axialnuten am Außenumfang der Nabe des Zahnrades stellt außerdem eine vorteilhafte Voraussetzung für eine axiale Sicherung des Kranzringes dar. Zu diesem Zweck kann die Nabe über den Kranzring axial vorstehen, sodass zumindest die an die Anlauffläche anschließende Nutwand der Axialnuten von der jeweiligen Feder weggeneigt verlaufen kann. Aufgrund eines solchen Verlaufs der Axialnuten bedingt die von der geneigten Nutwand im Anschluss an die Anlauffläche auf das freie Ende der Federn ausgeübte Kraft eine gegen den nabenfesten Kranzteil gerichtete, axiale Kraftkomponente, die den Kranzring über seine Federn an den nabenfesten Kranzteil des Zahnkranzes andrückt und bei abhebenden Belastungen gegen den nabenfesten Kranzteil zurückführt.

### Kurze Beschreibung der Zeichnung

In der Zeichnung ist der Erfindungsgegenstand beispielsweise dargestellt. Es zeigen
Fig. 1 ein erfindungsgemäßes Zahnrad für eine spielfreie Stirnradstufe in einer zum Teil aufgerissenen Ansicht der Seite mit dem Kranzring,
Fig. 2 dieses Zahnrad in einer Draufsicht senkrecht zur Radachse ohne Kranzring,
Fig. 3 den nabenseitigen Anschlag für das freie Ende einer Feder des Kranzringes in einem Schnitt nach der Linie III-III der Fig. 2 in einem größeren Maßstab und
Fig. 4 einen der Fig. 3 entsprechenden Ausschnitt der Nabe in einem Schnitt gemäß der Linie IV-IV der Fig. 2.

### Weg zur Ausführung der Erfindung

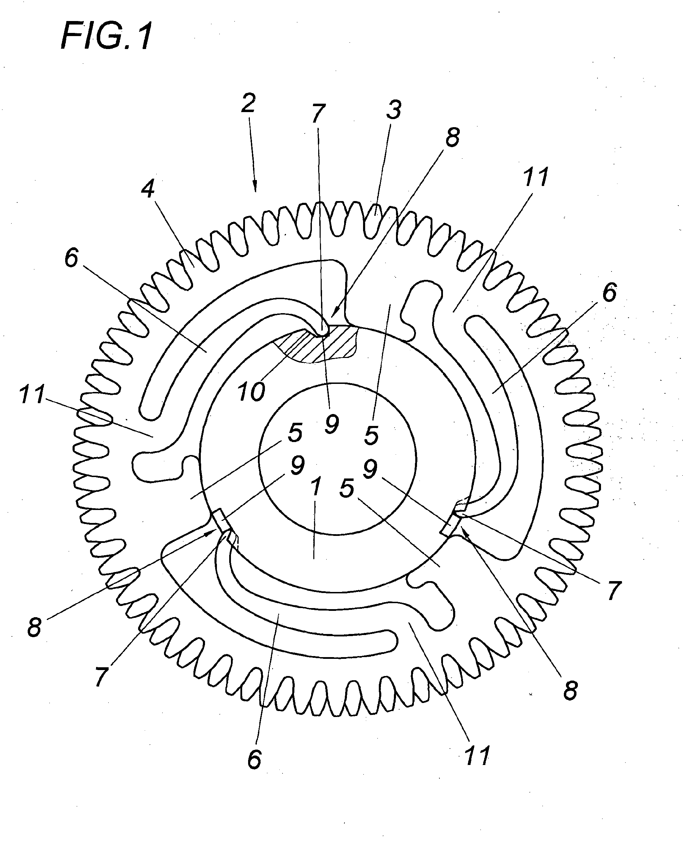

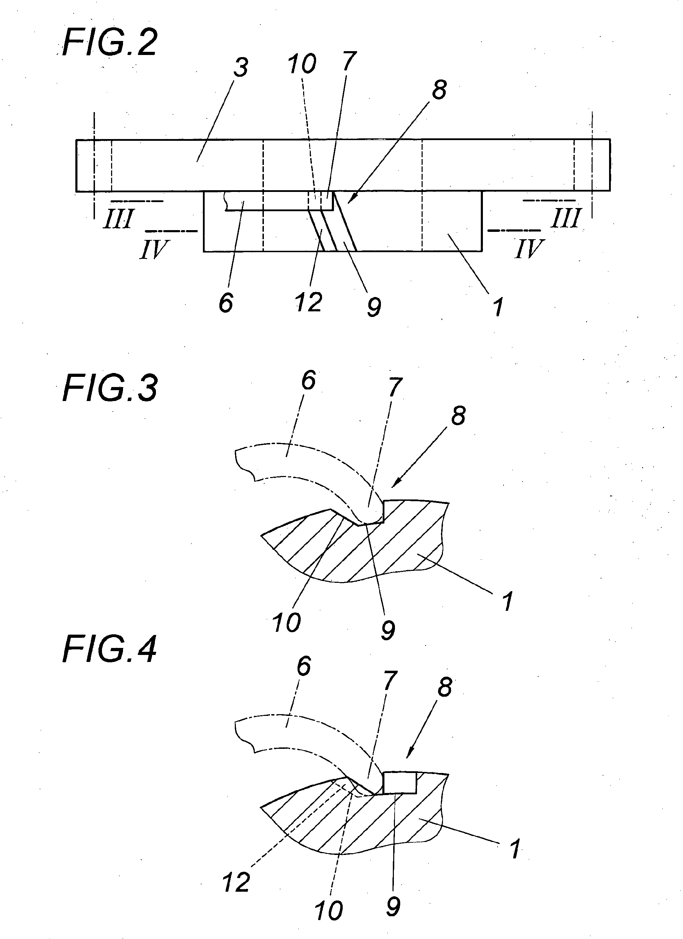

Das Zahnrad für eine spielfreie Stirnradstufe weist gemäß dem dargestellten Ausführungsbeispiel eine Nabe 1 und einen Zahnkranz 2 auf, der sich aus einem nabenfesten Kranzteil 3 und einem Kranzring 4 zusammensetzt, der über Lageransätze 5 auf der Nabe 1 drehbar gelagert ist. Wie der Fig. 1 entnommen werden kann, sind an den ringscheibenförmigen Kranzring 4 sich über einen Umfangsabschnitt der Nabe 1 erstreckende Federn 6 einstückig angeformt, die drehsymmetrisch bezüglich der Zahnkranzachse angeordnet sind. Die freien Enden 7 dieser Federn 6 stehen gegen die Nabe 1 vor und stützen sich an Anschlägen 8 ab, die durch Axialnuten 9 am Außenumfang der Nabe 1 gebildet werden. Diese ebenfalls drehsymmetrisch bezüglich der Zahnkranzachse angeordneten Anschläge 8 bilden jeweils eine Anlauffläche 10 für die freien Enden 7 der Federn 6, wie dies insbesondere den Fig. 3 und 4 entnommen werden kann. Die Anlaufflächen 10, die durch eine Wand der Axialnuten 9 gebildet werden, steigen radial nach außen gegen die Wurzeln 11 (Fig. 1) der Federn 6 an, sodass bei einer gegenseitigen Verdrehung des Kranzringes 4 gegenüber dem nabenfesten Kranzteil 3 die freien Enden 7 der Federn 6 auf die Anlaufflächen 10 auflaufen und damit den Verlagerungswiderstand entsprechend vergrößern, weil ja die Federn 6 zusätzlich gespannt werden müssen. Die durch die Anlaufflächen 10 bedingte radiale Verlagerung der freien Federenden 7 ermöglicht eine für die Federbelastung vorteilhafte Federkennlinie, ohne die Federbeaufschlagung des Kranzringes 4 gegenüber dem nabenfesten Kranzteil 3 zu beeinträchtigen.

Gemäß der Fig. 2 verlaufen die Axialnuten 9 von der jeweiligen Feder 6 weggeneigt, wobei aufgrund der Neigung der an die Anlauffläche 10 anschließenden Nutwand 12 eine axiale Kraftkomponente auf das freie Ende 7 der Federn 6 in Richtung auf den nabenfesten Kranzteil 3 ausgeübt werden kann, wenn das freie Ende 7 der Federn 6 auf diese geneigte Nutwand 12 aufläuft. Dies bedeutet eine Rückführung des Kranzringes 4, wenn aufgrund einer entsprechenden Belastung die Neigung besteht, dass der Kranzring 4 vom nabenfesten Kranzteil 3 abhebt.

## Patentansprüche

1. Zahnrad für eine spielfreie Stirnradstufe mit einer Nabe (1) und einem Zahnkranz (2), der entlang einer achsnormalen Teilungsebene in zwei Teilkränze geteilt ist, nämlich in einen nabenfesten Kranzteil (3) und in einen diesem gegenüber koaxial drehbar gelagerten Kranzring (4), der wenigstens drei bezüglich der Zahnkranzachse drehsymmetrisch angeordnete, die Nabe (1) abschnittsweise in Umfangsrichtung umschließende Federn (6) bildet, die mit ihren Wurzeln (11) einstückig mit dem drehbar auf der Nabe (1) gelagerten Kranzring (4) verbunden sind und sich mit ihren freien, gegen die Nabe (1) vorstehenden Enden (7) an ebenfalls drehsymmetrisch angeordneten Anschlägen (8) der Nabe (1) abstützen, **dadurch gekennzeichnet, dass** die Anschläge (8) der Nabe (1) in Umfangsrichtung gegen die Wurzeln (11) der zugehörigen Federn (6) radial nach außen ansteigende Anlaufflächen (10) für die freien Enden (7) der Federn (6) aufweisen.

2. Zahnrad nach Anspruch 1, **dadurch gekennzeichnet, dass** über den Außenumfang der Nabe (1) verteilte Axialnuten (9) die Anschläge (8) für die freien Enden (7) der Federn (6) bilden.

3. Zahnrad nach Anspruch 2, **dadurch gekennzeichnet, dass** die Nabe (1) über den Kranzring (4) axial vorsteht und dass zumindest eine an die Anlauffläche (10) anschließende Nutwand (12) der Axialnuten (9) von der jeweiligen Feder (6) weggeneigt verläuft.

## Claims

1. Gear for a spur gear section without play having a hub (1) and a sprocket (2), which is divided along an axis-normal division plane into two partial sprockets, namely into a hub-fixed sprocket part (3) and a sprocket ring (4) which is mounted so as to be coaxially rotatable in relation thereto, and which forms at least three springs (6) enclosing the hub (1) in sections in the circumferential direction, which are arranged in a rotationally-symmetrical manner in relation to the sprocket axis and are integrally connected at their bases (11) to the sprocket ring (4), mounted in a rotatable manner on the hub (1), and which are supported with their free ends (7), protruding towards the hub (1), on stops (8) of the hub (1) which are likewise arranged in a rotationally-symmetrical manner, **characterised in that** the stops (8) of the hub (1) have approach surfaces (10) for the free ends (7) of the springs (6), which surfaces rise radially outward in the circumferential direction towards the bases (11) of the associated springs (6).

2. Gear as claimed in claim 1, **characterised in that** axial grooves (9), which are distributed over the outer circumference of the hub (1), form the stops (8) for the free ends (7) of the springs (6).

3. Gear as claimed in claim 2, **characterised in that** the hub (1) protrudes axially beyond the sprocket ring (4), and **in that** at least one groove wall (12) of the axial grooves (9), which adjoins the approach surface (10), extends inclined away from the respective spring (6).

## Revendications

1. Pignon pour un étage de pignons droits sans jeu avec un moyeu (1) et une couronne dentée (2) qui est divisée en deux couronnes partielles le long d'un plan de séparation normal à l'axe, à savoir en une partie de couronne (3) fixée au moyeu et en un anneau de couronne (4) placé de façon à pouvoir tourner coaxialement par rapport à celle-ci, qui forme au moins trois ressorts (6) entourant le moyeu (1) dans certaines zones dans le sens périphérique, disposés symétriquement en rotation par rapport à l'axe de la couronne dentée, qui sont reliés en un seul bloc par leur pied (11) à l'anneau de couronne (4) monté pouvant tourner sur le moyeu (1) et qui s'appuient contre des butées (8) du moyeu (1), disposées également symétriquement en rotation, par leurs extrémités libres (7) faisant saillie en direction du moyeu (1), **caractérisé en ce que** les butées (8) du moyeu (1) présentent, dans le sens périphérique, des surfaces d'appui (10), formant une pente montante dirigée radialement vers l'extérieur en direction des pieds (11) des ressorts (6) correspondants, pour les extrémités libres (7) des ressorts (6).

2. Pignon selon la revendication 1, **caractérisé en ce que** des rainures axiales (9) réparties sur la périphérie extérieure du moyeu (1) forment les butées (8) pour les extrémités libres (7) des ressorts (6).

3. Pignon selon la revendication 2, **caractérisé en ce que** le moyeu (1) fait saillie axialement au-dessus de l'anneau de couronne (4) et **en ce qu'**au moins une paroi de rainure (12), reliée à la surface d'appui (10), des rainures axiales s'incline en s'éloignant du ressort (6) respectif.
